# EUROPEAN PATENT APPLICATION

(11) **EP 4 675 531 A1**
(43) Date of publication of application: **07.01.2026**
(21) Application number: 24764051.9
(22) Date of filing: 01.03.2024
(51) Int. Cl.: G06Q 10/10, G06F 16/93, H04L 9/32

(54) **MANAGEMENT DEVICE, CONTROL METHOD FOR MANAGEMENT DEVICE, AND PROGRAM**

(30) Priority: 02.03.2023 JP 2023031623; 19.05.2023 WO PCT/JP2023/018744
(71) Applicant: LE-TECHS INC., Tokyo 160-0005 (JP)
(72) Inventor: OGURA, Takashi, Tokyo 153-0065 (JP)
(74) Representative: Hoffmann Eitle
(86) International application number: PCT/JP2024/007900
(87) International publication number: WO 2024/181574

(57) **Abstract**

A management device according to an embodiment of the present invention is a management device for managing electronic signatures as to digital contents, and includes an instruction acquisition unit for acquiring an instruction for a signature as to the digital contents, and signature content information that is information indicating content of the signature, a signature generating unit for generating an electronic signature in response to the instruction, an affixing unit for affixing the electronic signature that is generated to the digital contents, an electronic certificate generating unit for generating an electronic certificate that relates to the electronic signature and that includes the signature content information, and a storage unit for storing the electronic certificate in a predetermined storage unit.

## Description

### Technical Field

**The** present disclosure relates to a management device, a control method of the management device, and a program.

### Background Art

Performing electronic signatures with respect to digital contents such as electronic documents and so forth, in order to prove that no alterations have been made, or the like, is known. For example, an electronic signature management system is known in which data that is an object of signature is electronically signed (e.g., Patent Document 1).

### Citation List

### Patent Document

Patent Document 1: Patent Publication JP-A-2018-067807

### Summary

### Technical Problem

However, regarding signature values generated in the electronic signature management system according to Patent Document 1, matters that a signer has optionally input, for example, cannot be included in the signature value. Accordingly, it is difficult to comprehend what sort of intent a party in interest has in performing electronic signatures as to electronic documents.

With the foregoing in view, it is an object of the present invention to provide a management device, a control method of the management device, and a program, whereby confirmation can be made regarding intent of an electronic signature performed by a signer.

### Solution to Problem

**A** management device according to an embodiment of the present invention is a management device for managing electronic signatures as to digital contents, and includes an instruction acquisition unit for acquiring an instruction for a signature as to the digital contents, and signature content information that is information indicating content of the signature, a signature generating unit for generating an electronic signature in response to the instruction, an affixing unit for affixing the electronic signature that is generated to the digital contents, an electronic certificate generating unit for generating an electronic certificate that relates to the electronic signature and that includes the signature content information, and a storage unit for storing the electronic certificate in a predetermined storage unit.

Accordingly, in a case in which an electronic signature is affixed to digital contents in accordance with a signature instruction, an electronic certificate containing signature content information, which is information indicating content of the signature with respect to the digital contents, is stored in a predetermined storage unit. Thus, the signature content information is recorded in the electronic certificate, whereby the intent of the electronic signature performed by the signer can be confirmed by confirming the electronic certificate.

### Advantageous Effects of Invention

According to the present invention, the intent of the electronic signature performed by the signer can be confirmed.

### Brief Description of Drawings

Fig. 1 is a schematic diagram illustrating an overview of an electronic signature management system 100 using a management device 1 according to an embodiment.
Fig. 2 is a schematic diagram illustrating an electronic document D to which are affixed electronic signatures S generated by the management device 1 according to the embodiment.
Fig. 3 is a block diagram illustrating a configuration of the management device 1 according to the embodiment.
Fig. 4 is a schematic diagram showing an example of a data structure of an electronic certificate according to the embodiment.
Fig. 5 is a block diagram illustrating a configuration of a user terminal 4 according to the embodiment.
Fig. 6A is a sequence diagram showing an example of operational processing executed by the electronic signature management system 100 according to the embodiment.
Fig. 6B is a sequence diagram showing another example of operational processing executed by the electronic signature management system 100 according to the embodiment.
Fig. 6C is a sequence diagram showing still another example of operational processing executed by the electronic signature management system 100 according to the embodiment.

### Description of Embodiments

A preferred embodiment of the present invention will be described with reference to the attached drawings (Note that in the drawings, like signs denote same or equivalent configurations).

### (1) Overview

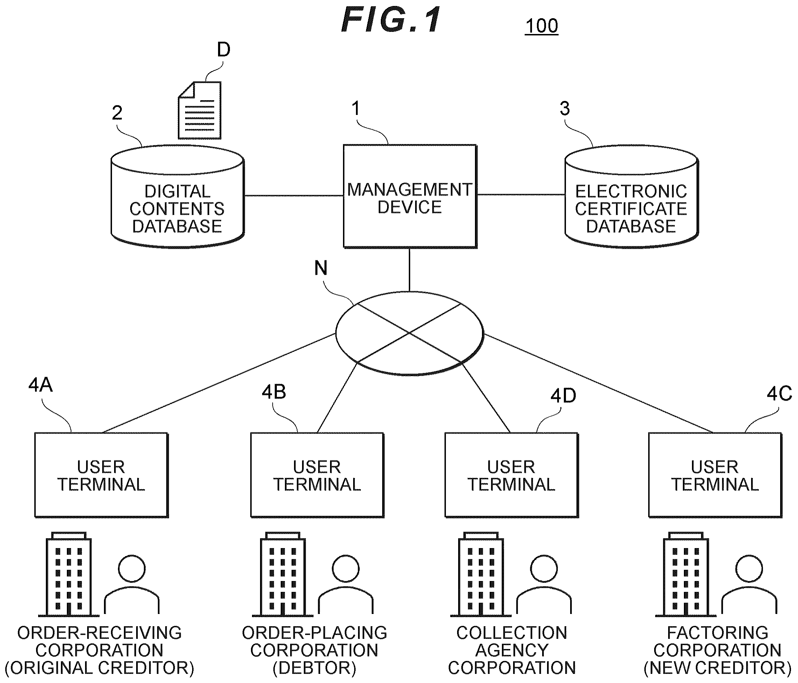

Fig. 1 is a schematic diagram illustrating an overview of an electronic signature management system 100 using a management device 1 according to an embodiment.

As illustrated in Fig. 1, the electronic signature management system 100 includes, for example, the management device 1, a digital contents database 2, an electronic certificate database 3, a plurality of user terminals 4, and so forth. The management device 1 is connected to each of the digital contents database 2 and the electronic certificate database 3 so as to be capable of managing (storing, deleting, changing, and so forth) information stored in these databases. The management device 1 is also mutually connected to the plurality of user terminals via a communication network N such as the Internet or the like, so as to be capable of transmitting/receiving information therewith.

Now, in the present embodiment, users include an order-receiving corporation that receives orders for provision of products/services, an order-placing corporation that places orders with the order-receiving corporation for the products/services, a factoring corporation that performs factoring with respect to receivables pertaining to placement/receipt of orders among the order-receiving corporations and the order-placing corporations, and a collection agency corporation that acts to collect transfer payments with regard to the factoring, for example. Also, for example, the plurality of user terminals 4 include a user terminal 4A that is used by the order-receiving corporation, a user terminal 4B that is used by the order-placing corporation, a user terminal 4C that is used by the factoring corporation, and a user terminal 4D that is used by a person in charge at the collection agency corporation.

The management device 1 is a computer (information processing device) such as a server or the like, for example, and has a processing unit such as a CPU, and a storage unit such as memory or the like. The management device 1 is a device that generates electronic signatures S as to digital contents D such as contracts and so forth of users. The digital contents D are saved in the digital contents database 2, for example. That is to say, the management device 1 is a device that has functions of generating electronic signatures S to be affixed to digital contents D of users. The management device 1 may create digital contents D that indicate consent or the like to the digital contents D, by affixing electronic signatures S to the digital contents D in a visually recognizable manner, for example.

Note that in the embodiment below, the term "digital contents" may include "electronic document", or may include "electronic image". The term "electronic document" may include any document such as contracts, estimates, application forms, order sheets, statements of delivery, invoices, receipts, delivery invoices, meeting minutes, approval documents, request forms, signature lists, and so forth, which are electronically created. Also, the term "electronic image" may be still images, or may be moving images (video) made up of a plurality of still images that are consecutive in time sequence. Moving images may be combined with audio. Also, the term "electronic signature" may include processing of electronically implementing, as to digital contents D, an act of affixing a seal to a contract or the like on paper. Also, the term "electronic certificate" may be a certificate for proving matters relating to an electronic signature, and may include, for example, an electromagnetic record created to prove that matters, used to confirm that a user has performed the electronic signature, relate to this user.

The management device 1 is connected to the electronic certificate database 3, as illustrated in Fig. 1. The management device 1 creates an electronic certificate for the digital contents D to which are affixed the electronic signatures S. The management device 1 stores the electronic certificate for the digital contents D that are created in the electronic certificate database 3. The electronic certificate database 3 may be made up of a plurality of node computers that store a blockchain, for example. The format of the blockchain is not limited in particular, but may be made up as a consortium-type private blockchain, for example. The management device 1 stores the electronic certificate, for example, in the electronic certificate database 3 that is made up as this blockchain or the like.

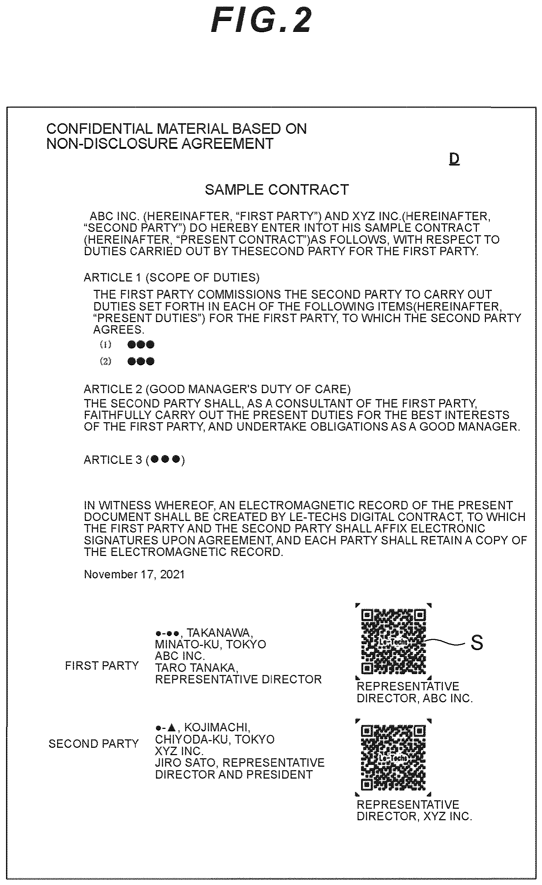

Fig. 2 is a schematic diagram illustrating an electronic document D to which are affixed electronic signatures S generated by the management device 1 according to the embodiment. In particular, the management device 1 affixes electronic signatures S, which are visually recognizable, as to the electronic document D, such as illustrated in Fig. 2. The management device 1 may affix electronic signatures S corresponding to individual users, for example, in a visually recognizable manner. The management device 1 may affix electronic signatures S that are illustrated as QR code (registered trademark), for example, to the digital contents D. Note that in a case of the management device 1 affixing electronic signatures S to an electronic image that is digital contents, the electronic signatures S may be superimposed on at least part of one still image included in the electronic image, or the electronic signatures S may be affixed to metadata that the electronic image has.

The user terminal 4 is configured as a device that is different from the management device 1, for example, as illustrated in Fig. 1. The user terminal 4 is a computer (information processing device) such as a smartphone, tablet terminal, personal computer, or the like, that has image-capturing functions, for example, and has a processing unit such as a CPU or the like, and a storage unit such as memory or the like. The user terminal 4 acquires information contained in electronic certificates held in the electronic certificate database 3, on the basis of the electronic signature S generated by the management device 1, and executes processing for confirming authenticity of the digital contents D on the basis of the information that is acquired. The user terminal 4 also executes display processing of various types of information on the basis of the information included in the electronic certificate that is acquired. In particular, the user terminal 4 displays a URL for identifying a storage region where the digital contents D are stored in the digital contents database 2. When the user selects this URL, the user terminal 4 acquires the digital contents D from the digital contents database 2, and performs display thereof. Accordingly, contents of the digital contents D can be confirmed in an environment in which the authenticity of the digital contents D is guaranteed. Further, the contents of the digital contents D can be confirmed from the electronic signature S, and accordingly the user is capable of holding strength of evidence (that is supported by information in the electronic certificate) by saving paper or the like on which the digital contents D are printed, instead of a file of the digital contents D.

### (2) Configuration

### (2-1) Management Device 1

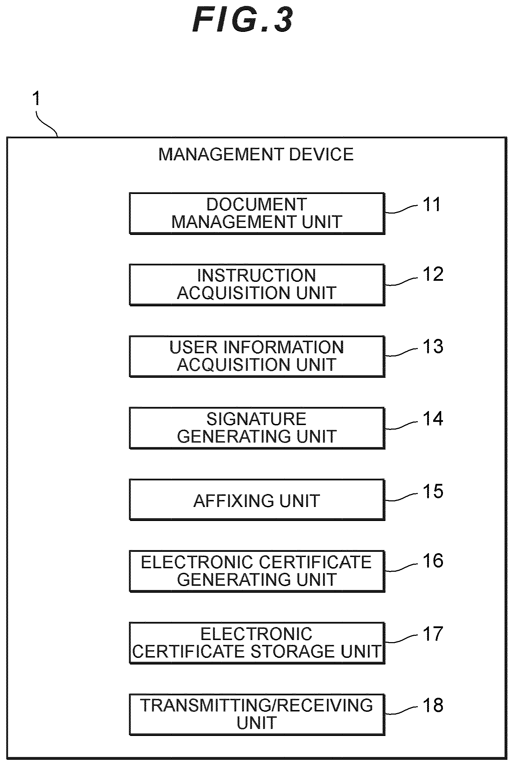

Fig. 3 is a block diagram illustrating a configuration of the management device 1 according to the present embodiment. The management device 1 includes a document management unit 11, an instruction acquisition unit 12, a user information acquisition unit 13, a signature generating unit 14 an affixing unit 15, an electronic certificate generating unit 16, an electronic certificate storage unit 17, and a transmitting/receiving unit 18. These various types of functional units are realized by the processing unit, such as a CPU or the like that the management device 1 has, operating.

The document management unit 11 is realized by the CPU operating, for example. The document management unit 11 executes, with respect to digital contents D that are the object of electronic signatures, creation, acquisition, amendment, storage in the storage unit, and so forth. The document management unit 11 acquires digital contents D from the digital contents database 2 or the user terminal 4, for example. The digital contents D may be electronic data created by word-processing software or image-generating software, or may be data obtained by scanning a printed article such as paper or the like. The document management unit 11 may also create/amend/etc. digital contents on the basis of instructions acquired from the user terminal 4. The document management unit 11 may also store the digital contents in the digital contents database 2.

The instruction acquisition unit 12 acquires an instruction to sign the acquired digital contents, which is the object of signature (signature instruction). The instruction acquisition unit 12 acquires the signature instruction from the user terminal 4, for example.

The user information acquisition unit 13 acquires information of the user as user information. Also, in the present embodiment, the user information acquisition unit 13 acquires a user ID and a username of the user, which are issued in advance. The user information acquisition unit 13 acquires the user IDs and the usernames of each of the contractors (users) here, as user information. Also, in the present embodiment, the user information acquisition unit 13 acquires user information from each of two corporations, which are users, at the time of generating electronic signatures S. The user information may include any information unique to the users that is managed by the users.

The signature generating unit 14 generates electronic signatures in which electronic certificate identifiers, which are identifiers of the electronic certificates, are coded. Note that the signature generating unit 14 may include a unique text string in the electronic certificate identifier. This text string may be unique for each electronic signature S, for example. The electronic certificate identifiers are generated (numbered) by electronic signatures S being affixed to digital contents D, for example.

The affixing unit 15 affixes the electronic signature S that is generated to the digital contents D. The affixing unit 15 may affix the electronic signature S to the digital contents D in a visually recognizable manner, for example. Accordingly, identification that the electronic signature S is affixed to the digital contents D can be easily performed. The affixing unit 15 may affix, at a position alongside the name of the corporation and the name of the representative, which are information of the user described in the digital contents D, the electronic signature S that is generated, as illustrated in Fig. 2 for example. The affixing unit 15 may enter the electronic signature S at a position in the digital contents D at which the electronic signature S can be understood to be corresponding to the information of the user described therein, for example. In the present embodiment, the affixing unit 15 may list the name of the user included in the user information that is acquired in the electronic signature S as well. The affixing unit 15 lists the username to the lower side of the electronic signature S (QR code) of the corresponding user in the displayed digital contents D (electronic document), as illustrated in Fig. 2 for example. Thus, which user's electronic signature S the electronic signature S that is coded is, can be clarified. Further, listing along with the electronic signature S that is coded enables the code to be handled in the same way as a seal, and accordingly a visual effect such as affixing a seal on paper can be obtained.

The electronic certificate generating unit 16 generates various types of electronic certificates relating to electronic signatures S. The electronic certificates are stored in the electronic certificate database 3, for example.

The electronic certificate storage unit 17 stores the electronic certificates, which are generated, in the electronic certificate database 3.

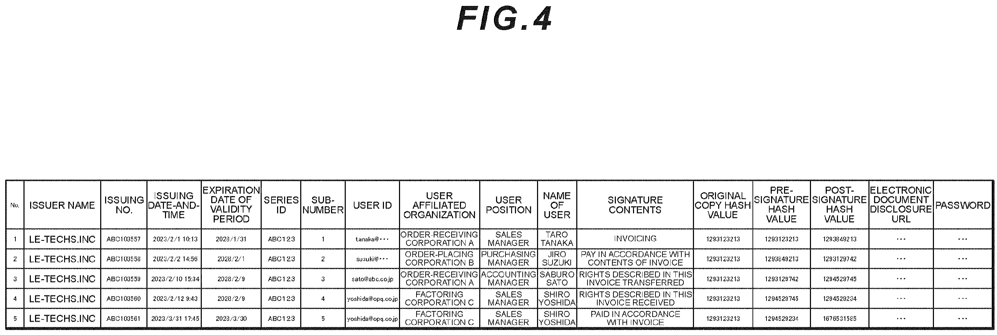

Fig. 4 is a schematic diagram showing an example of a data structure of an electronic certificate stored in the electronic certificate database 3. Each row shown in Fig. 4 corresponds to one electronic certificate. One electronic certificate is added to the electronic certificate database 3 each time an electronic signature is affixed as to the digital contents, for example.

Electronic certificates may include, for example, issuer name, issuing No., issuing date-and-time, expiration date of validity period, series ID, sub-number, user ID, user affiliated organization, user position, name of user, signature content, original copy hash value, pre-signature hash value, post-signature hash value, digital contents disclosure URL, and password.

The issuer name is the name of the issuer of the electronic certificate, and may be the name of the manager of the management device 1, for example. The issuing No. is an electronic certificate identifier (identifier for identifying the electronic certificate) issued by the management device 1. The issuing date-and-time is the date and time at which the electronic certificate was issued, and may be time information of the signature. The issuing date-and-time is an example of order information indicating the order of electronic signatures (information indicating, each time an electronic signature is affixed, what order this electronic signature is in, out of the sequence of electronic signatures). The expiration date of validity period is the date on which the validity period of the electronic certificate expires.

The series ID is an example of system identification information, which is identification information for identifying the system of the digital contents D. The series ID may be identification information that is unique to (the system of) the digital contents D, and that does not change even if one or a plurality of electronic signatures S are affixed as to the digital contents D. In other words, the series ID is identification information imparted to the contents that the digital contents D represent (may include amended contents). Accordingly, in a case in which electronic signatures S are consecutively affixed as to digital contents D, managing these digital contents D and the sequence of electronic signatures S as a series, confirmation and so forth regarding which electronic signature S is the newest in the sequence of electronic signatures S, or whether electronic signatures S affixed to digital contents D in possession are the newest, and so forth, can be performed.

The sub-number is an example of order information indicating the order of electronic signatures S (information indicating, each time an electronic signature S is affixed, which order this electronic signature S is in, out of the sequence of electronic signatures S). Although natural numbers such as 1, 2, 3 and so forth are used as sub-numbers in the example shown in Fig. 4, any sub-number (order information) configuration may be made, using symbols, signs, and so forth, as long as the order can be indicated.

The user ID is identification information of the user. The user affiliated organization is information indicating the organization with which the user is affiliated. The user position is information indicating the position of the user in this organization. The name of user is the name of the user (name of the person in charge for each corporation).

The signature content may be information accompanying the electronic signature S, and may be text-format data optionally input by the user. The signature content may be, for example, information that expresses the intent of the user accompanying the electronic signature, and in a case in which an amendment is performed with respect to the digital contents that are the object of signature, this may be information indicating that an amendment has been made, or information indicating the content of the amendment. Accordingly, the intent of the user as to the electronic signature, whether or not the digital contents have been amended, the content thereof, and so forth, can be confirmed by confirming the electronic certificate.

The original copy hash value, the pre-signature hash value, and the post-signature hash value are used for confirmation processing and so forth for consistency regarding the digital contents D, for example. Confirmation processing of consistency will be described later. The original copy hash value is a hash value of the digital contents D (original copy) that does not include any electronic signature. The pre-signature hash value is a hash value of the digital contents D immediately prior to affixing of the electronic signature S (the digital contents D including an electronic signature S that is before this electronic signature S in order). The post-signature hash value is a hash value of the digital contents D to which the newest electronic signature S has been affixed.

The digital contents disclosure URL may be a URL for identifying a storage region in which the digital contents D is saved (e.g., a URL of the digital contents D in the digital contents database 2). A validity expiration date may be set for the digital contents disclosure URL. The password may be a password necessary to access the file disclosure URL and view the digital contents D, and may be imparted optionally or by the system.

Note that the above-described electronic certificate is only exemplary, and that any item of the above-described items may not be included in the electronic certificate according to the present embodiment, and also items other than the above-described items may be included.

The transmitting/receiving unit 18 transmits/receives various types of information to and from the user terminal 4. The transmitting/receiving unit 18 receives signature instructions as to digital contents D from the user terminal 4, for example. Also, the transmitting/receiving unit 18 transmits, for example, digital contents D (including those to which electronic signatures S are affixed) to the user terminal 4.

Each of the configurations included in the management device 1 can be realized by hardware, software, or a combination thereof. Now, being realized by software means being realized by a computer reading and executing a program. The program can be stored using various types of non-transitory computer readable mediums, so as to be supplied to the computer. Non-transitory computer readable mediums include various types of tangible storage mediums. Examples of non-transitory computer readable mediums include magnetic recording mediums (e.g., flexible disks, magnetic tape, hard disk drives), magneto-optical recording mediums (e.g., magneto-optical disks), CD-ROMs, (Read Only Memory), CD-R, CD-R/W, semiconductor memory (e.g., mask ROM, PROM (Programmable ROM), EPROM (Erasable PROM), flash ROM, and RAM (random access memory)). Also, a display program may be supplied to the computer by various types of transitory computer readable mediums. Examples of transitory computer readable mediums include electrical signals, optical signals, and electromagnetic waves. Transitory computer readable mediums can supply the program to the computer via wired communication paths such as wires, optical fiber, and so forth, or via wireless communication paths.

### (2-2) User Terminal 4

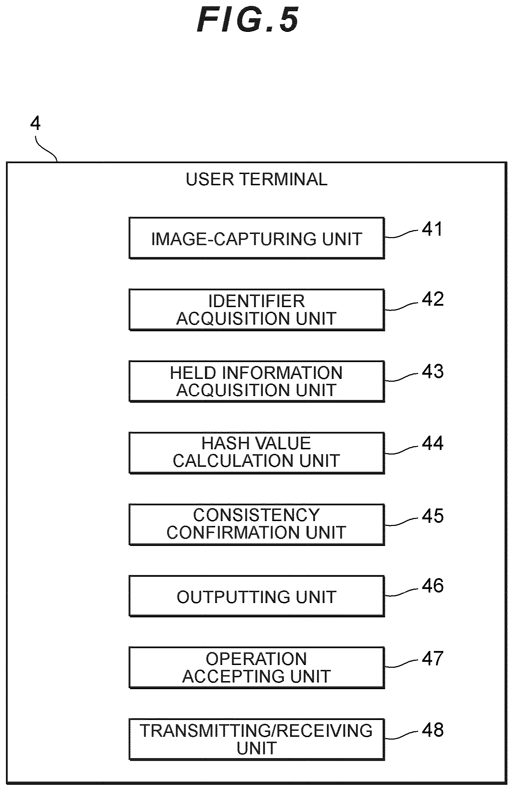

Fig. 5 is a block diagram illustrating a configuration of the user terminal 4 according to the embodiment. The user terminal 4 includes an image-capturing unit 41, an identifier acquisition unit 42, a held information acquisition unit 43, a hash value calculation unit 44, a consistency confirmation unit 45, an outputting unit 46, and an operation accepting unit 47. These various types of functional units are realized by the processing unit, such as a CPU or the like that the user terminal 4 has, operating.

The image-capturing unit 41 is an image-capturing mechanism including a so-called camera. The image-capturing unit 41 performs image-capturing of, for example, any electronic signature S affixed to digital contents D. The image-capturing unit 41 performs image-capturing of, for example, any electronic signature S included in digital contents D displayed on a display unit (omitted from illustration) of another terminal.

The identifier acquisition unit 42 acquires an electronic certificate identifier included in the electronic signature S that is image-captured, by performing image-capturing of the electronic signature S (QR code).

The hash value calculation unit 44 calculates the various types of hash values on the basis of the digital contents D. The hash value calculation unit 44 may, for example, calculate the hash value of the digital contents D including the newest electronic signature S (post-signature hash value). Also, the hash value calculation unit 44 may, for example, calculate the hash value of the digital contents D not including the newest electronic signature S alone (pre-signature hash value). Also, the hash value calculation unit 44 may, for example, calculate the hash of the digital contents D as the original copy including none of the electronic signatures S (original copy hash value).

The consistency confirmation unit 45 executes confirmation processing for consistency of the digital contents D, regarding the digital contents D, on the basis of the electronic certificate stored in the management device 1. Confirmation processing for consistency regarding the digital contents D enables whether or not the digital contents D are authentic to be determined. For example, the consistency confirmation unit 45 acquires the electronic certificate from the management device 1 on the basis of the electronic certificate identifier acquired by image-capturing of one of the electronic signatures S included in the digital contents D, and thereupon confirms consistency between the hash value included in this electronic certificate that is acquired (original copy hash value, pre-signature hash value, and/or post-signature hash value), and the hash value calculated from the digital contents D by the hash value calculation unit 44 (original copy hash value, pre-signature hash value, and/or post-signature hash value). The consistency confirmation unit 45 may, for example, determine whether or not there are no alterations in the digital contents D as the original copy by determining whether or not the original copy hash value obtained from the digital contents D that are the object agrees with the original copy hash value included in the electronic certificate. Also, the consistency confirmation unit 45 may, for example, determine whether or not there are no alterations in the digital contents D in a period from the electronic signature S that is one previous being performed until the newest electronic signature S is performed, by determining whether or not the pre-signature hash value obtained from the digital contents D that are the object (hash value calculated on the basis of the digital contents obtained by removing only the newest electronic signature therefrom) agrees with the post-signature hash value included in the electronic certificate that is one previous in order. A specific operation example is as follows. That is to say, by the user terminal 4 performing image-capturing of the electronic signatures S of the digital contents D output onto paper (delivered personally, transferred, or the like), for example, the user can access the digital contents D (original copy) saved in the (digital contents database 2 or the like of) the management device 1, and display the digital contents D on the user terminal 4. The management device 1 may calculate a hash value regarding the digital contents D that are accessed, and perform reference or the like with respect to the hash value (original copy hash value, pre-signature hash value, and post-signature hash value) stored in the electronic certificate database 3, thereby determining whether the digital contents D are authentic. Regarding digital contents D that are delivered personally or transferred, the user can, for example, confirm whether the digital contents D are authentic by performing visual comparison or the like of the digital contents D that are delivered personally or transferred with the digital contents D stored in the management device 1 that are displayed on the user terminal 4. Also, whether the digital contents D stored in the management device 1 are authentic may be determined by, for example, referencing the electronic certificate database 3.

The outputting unit 46 outputs various types of information relating to the digital contents D. For example, the outputting unit 46 outputs information of various types of electronic certificates acquired from the electronic certificate database 3. The outputting unit 46 also outputs, for example, confirmation results of the consistency from the consistency confirmation unit 45.

The operation accepting unit 47 accepts various types of operations performed by the user. The operation accepting unit 47 accepts, for example, selection of performing confirmation processing of the consistency of the digital contents D. The operation accepting unit 47 also accepts, for example, transitioning of various types of screens displaying information relating to the digital contents D, selection of links, and so forth.

A transmitting/receiving unit 48 performs transmission/reception of various types of information with the management device 1 and other user terminals 4. The transmitting/receiving unit 48 transmits a signature instruction as to digital contents, for example, to the management device 1. Also, the transmitting/receiving unit 48 receives digital contents D (including those to which electronic signatures S are affixed) and electronic certificates, for example, from the management device 1.

### (3) Operation Example

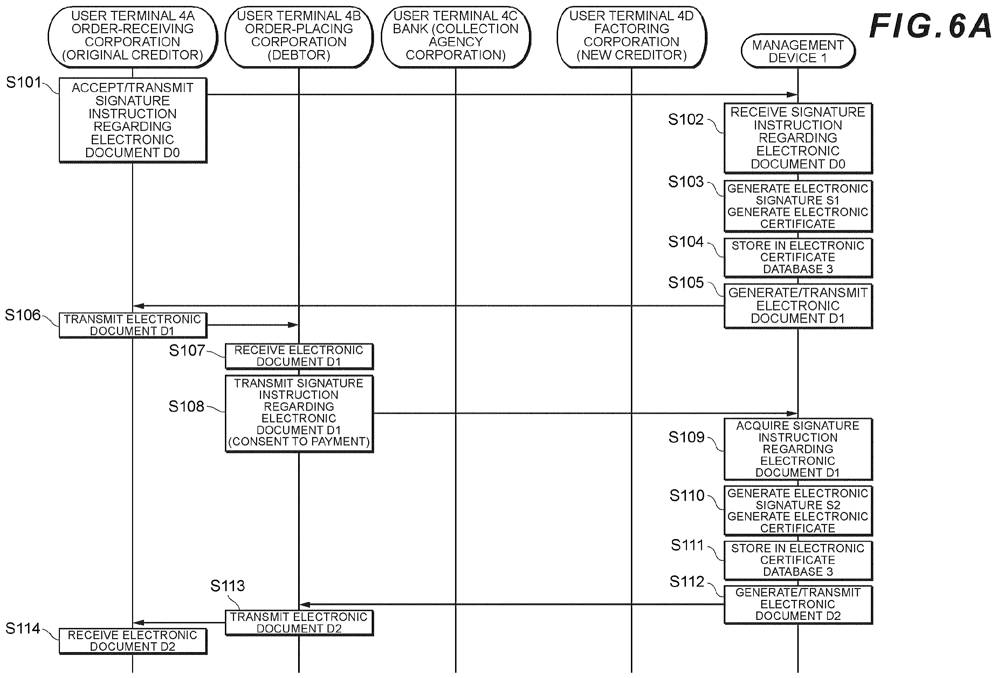

Fig. 6A to Fig. 6C are sequence diagrams illustrating an example of operational processing executed by the electronic signature management system 100 according to the embodiment. In the following, a state will be assumed in which an order-placing corporation has placed an order with an order-receiving corporation, for products/services that the order-receiving corporation provides, and accordingly a person in charge at the order-receiving corporation has created an electronic document DO as an invoice to the order-placing corporation regarding these products/services. Note that the creation of the electronic document D0 may be created by the user terminal 4A using an electronic document creating service that the management device 1 provides, or may be created using common word-processing software or the like that does not use such a creating service. Also, the management device 1 may store the electronic document D0 that is created in the electronic document database 2, or the user terminal 4A may perform storage thereof in a storage unit that the user terminal 4A is capable of accessing. Note that while this sequence diagram exemplifies a case in which the electronic signature management system 100 according to the present embodiment handles electronic documents that are digital contents, this is not limited to electronic documents, and can be applied to other digital contents such as electronic images and so forth.

### (3-1) Occurrence of Receivables

Fig. 6A is a sequence diagram relating to occurrence of receivables. Upon receiving an operation for a signature instruction as to an electronic document D0 by the person in charge at the order-receiving corporation, the user terminal 4A that is used by the person in charge at the order-receiving corporation transmits the signature instruction as to the electronic document D0 to the management device 1 (S101). The management device 1 receives the signature instruction as to the electronic document D0 from the user terminal 4A (S102).

The signature instruction as to the electronic document D0 may include, for example, data of the electronic document D0 itself, or may include information for identifying the electronic document D0 (series ID or the like) stored in the electronic document database 2 or in a storage unit or the like that the user terminal 4A is capable of accessing. Also, the signature instruction may include, for example, any item recorded in the electronic certificate database 3 (item relating to the person in charge at the order-receiving corporation, or the like). Also, the signature instruction may include, for example, signature contents input by the person in charge at the order-receiving corporation. In the example shown in Fig. 4, the signature contents of "invoicing" input by the person in charge at the order-receiving corporation are shown.

On the basis of the signature instruction, the management device 1 generates an electronic signature S1 by the person in charge at the order-receiving corporation, and also generates am electronic certificate (S103). With respect to generating of the electronic certificate, the management device 1 generates a hash value for the electronic document D0 immediately prior to affixing the electronic signature S1, and includes this in the electronic certificate as the pre-signature hash value. Also, the management device 1 generates a hash value for an electronic document D1 after affixing the electronic signature S1, and includes this in the electronic certificate as the post-signature hash value. Also, the management device 1 generates a hash value for the electronic document D0 including no electronic signature S, and includes this in the electronic certificate as the original copy hash value. The management device 1 stores the electronic certificate that is generated (e.g., the electronic certificate of row 1 shown in Fig. 4) in the electronic certificate database 3 (S104).

The management device 1 affixes the electronic signature S1 that is generated to the electronic document D0, thereby generating an electronic document D1. The management device 1 then transmits the electronic document D1 that is generated to the user terminal 4A (S105). The user terminal 4A may store the electronic document D1 that is received in a storage unit that the user terminal 4A is capable of accessing.

The user terminal 4A transmits the electronic document D1 to the user terminal 4B that is used by a person in charge at the order-placing corporation, in accordance with an operation performed by the person in charge at the order-receiving corporation (S106). Note that transmission of the electronic document D1 to the user terminal 4B may be performed via the management device 1. The user terminal 4B receives the electronic document D1 (S107). The user terminal 4B may store the electronic document D1 that is received in a storage unit that the user terminal 4B is capable of accessing.

The person in charge at the order-placing corporation confirms the contents of the electronic document D1 that is received (contents of the invoice) as appropriate, and performs an operation for a signature instruction as to the electronic document D1 by the person in charge at the order-placing corporation. Upon accepting this operation, the user terminal 4B transmits the signature instruction as to the electronic document D1 to the management device 1 (S108). The management device 1 receives the signature instruction regarding the electronic document D1 from the user terminal 4B (S109).

The signature instruction as to the electronic document D1 may include, for example, data of the electronic document D1 itself, or may include information for identifying the electronic document D1 (series ID or the like) stored in the electronic document database 2 or in a storage unit or the like that the user terminal 4B is capable of accessing. Also, the signature instruction may include, for example, any item recorded in the electronic certificate database 3 (item relating to the person in charge at the order-placing corporation, or the like). Also, the signature instruction may include, for example, signature contents input by the person in charge at the order-placing corporation. In the example shown in Fig. 4, the signature contents of "pay in accordance with contents of invoice" input by the person in charge at the order-placing corporation are shown.

On the basis of the signature instruction, the management device 1 generates an electronic signature S2 by the person in charge at the order-placing corporation, and also generates an electronic certificate (S110). With respect to generating of the electronic certificate, the management device 1 generates a hash value for the electronic document D1 immediately prior to affixing the electronic signature S2, and includes this in the electronic certificate as the pre-signature hash value. Also, the management device 1 generates a hash value for an electronic document D2 after affixing the electronic signature S2, and includes this in the electronic certificate as the post-signature hash value. Also, the management device 1 generates a hash value for the electronic document D0 including no electronic signature S, and includes this in the electronic certificate as the original copy hash value. The management device 1 stores the electronic certificate that is generated (e.g., the electronic certificate of row 2 shown in Fig. 4) in the electronic certificate database 3 (S111).

The management device 1 may determine whether the contents of the electronic document D1 have not been altered. That is to say, the management device 1 may determine whether the contents of the electronic document D1 that is an object of affixing the electronic signature S2 have not been altered from the contents of the electronic document D1 immediately following affixing of the electronic signature S1 that is one previous. For example, the management device 1 compares the post-signature hash value in the electronic certificate of row 1 shown in Fig. 4 with the pre-signature hash value in the electronic certificate of row 2 therein, and upon doing so, if the two agree, determines that the electronic document D1 has not been altered, and if the two do not agree, determines that the electronic document D1 has been altered. The management device 1 may output results of the determination, by transmitting to the user terminal 4B or the like. Accordingly, the person in charge at the order-placing corporation can confirm continuity of the contents of the electronic document D1 that is the object, when performing the electronic signature S2.

The management device 1 affixes the electronic signature S2 that is generated to the electronic document D1, thereby generating an electronic document D2. The management device 1 then transmits the electronic document D2 that is generated to the user terminal 4B (S112). The user terminal 4B may store the electronic document D2 that is received in a storage unit that the user terminal 4B is capable of accessing.

The user terminal 4B transmits the electronic document D2 to the user terminal 4A that is used by the person in charge at the order-receiving corporation, in accordance with an operation performed by the person in charge at the order-placing corporation (S113). Note that transmission of the electronic document D2 to the user terminal 4A may be performed via the management device 1. The user terminal 4A receives the electronic document D2 (S114). Note that a notification may be transmitted from the user terminal 4B to the user terminal 4A, to the effect of consenting to payment, via the management device 1 or without going therethrough. The user terminal 4A may store the electronic document D2 that is received in a storage unit that the user terminal 4A is capable of accessing.

### (3-2) Transfer of Receivables

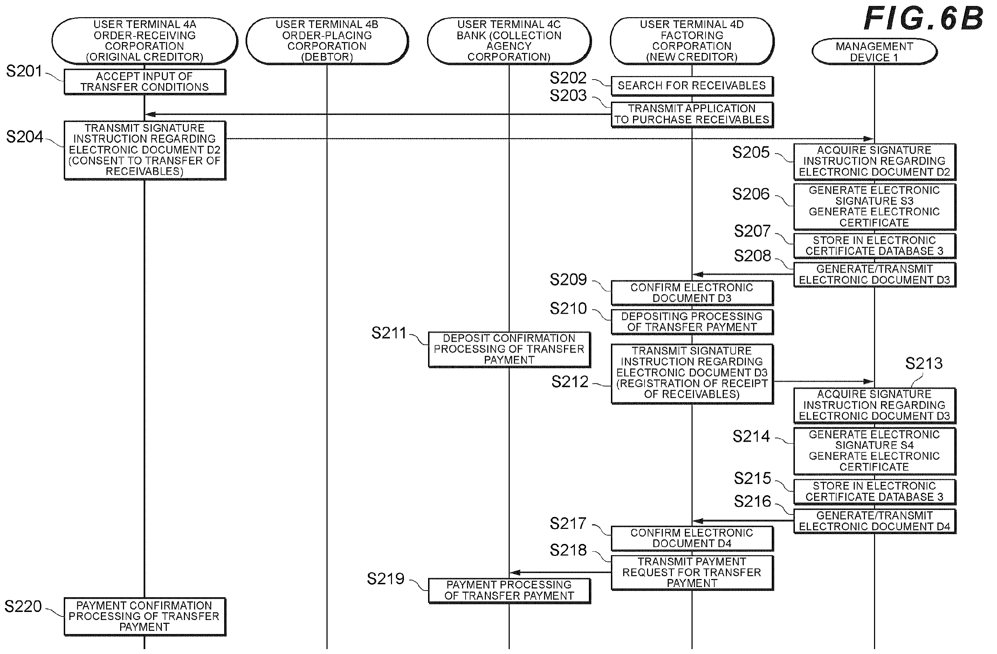

Fig. 6B is a sequence diagram relating to transfer of receivables. The user terminal 4A that is used by the person in charge at the order-receiving corporation accepts operation of input regarding transfer conditions relating to receivables that the electronic document D2 indicates, performed by the person in charge at the order-receiving corporation (S201). The contents of the transfer conditions are not limited in particular, and may include any item relating to the receivables (monetary amount, due date, or the like). The transfer conditions that are input are transmitted from the user terminal 4A to the management device 1, and the management device 1 records these in the electronic document database 2 in a searchable manner.

The user terminal 4C that is used by a person in charge at the factoring corporation executes processing for searching for receivables, in accordance with operations performed by the person in charge at the factoring corporation (S202). For example, the user terminal 4C transmits a search request including transfer conditions such as monetary amount or the like, input by the person in charge at the factoring corporation, to the management device 1. The management device 1 searches for receivables using the transfer conditions included in this search request as a key, in accordance with the search request received from the user terminal 4C, and transmits search results thereof to the user terminal 4C.

**An** assumption will be made here that the search results are a hit regarding the electronic document D2, and that information relating to this electronic document D2 is transmitted from the management device 1 to the user terminal 4C. Upon the person in charge at the factoring corporation confirming the information relating to the electronic document D2, and thereafter deciding to purchase the receivables pertaining to this electronic document D2, the person in charge at the factoring corporation inputs, to the user terminal 4C, an application to purchase the receivables. The user terminal 4C transmits the application to purchase to the user terminal 4A used by the person in charge at the order-receiving corporation, which is the original creditor (S203). Note that this transmission processing may be executed via the management device 1.

In a case in which the person in charge at the order-receiving corporation, which is the original creditor, confirms the application to purchase by the person in charge at the factoring corporation, and decides to transfer the receivables, the person in charge at the order-receiving corporation inputs a signature instruction for consent to transfer receivables, as to the electronic document D2, to the user terminal 4A. The user terminal 4A transmits the signature instruction as to the electronic document D2 to the management device 1, in accordance with these operations (S204). The management device 1 receives the signature instruction as to the electronic document D2 from the user terminal 4A (S205).

The signature instruction as to the electronic document D2 may include, for example, data of the electronic document D2 itself, or may include information for identifying the electronic document D2 (series ID or the like) stored in the electronic document database 2 or in a storage unit or the like that the user terminal 4A is capable of accessing. Also, the signature instruction may include, for example, any item recorded in the electronic certificate database 3 (item relating to the person in charge at the order-receiving corporation, or the like). Also, the signature instruction may include, for example, signature contents input by the person in charge at the order-receiving corporation. In the example shown in Fig. 4, the signature contents of "rights described in this invoice transferred" input by the person in charge at the order-receiving corporation are shown.

On the basis of the signature instruction, the management device 1 generates an electronic signature S3 by the person in charge at the order-receiving corporation, and also generates an electronic certificate (S206). With respect to generating of the electronic certificate data, the management device 1 generates a hash value for the electronic document D2 immediately prior to affixing the electronic signature S3, and includes this in the electronic certificate as the pre-signature hash value. Also, the management device 1 generates a hash value for an electronic document D3 after affixing the electronic signature S3, and includes this in the electronic certificate as the post-signature hash value. Also, the management device 1 generates a hash value for the electronic document D0 including no electronic signature S, and includes this in the electronic certificate as the original copy hash value. The management device 1 stores the electronic certificate that is generated (e.g., the electronic certificate of row 3 shown in Fig. 4) in the electronic certificate database 3 (S207).

The management device 1 may determine whether the contents of the electronic document D2 have not been altered. That is to say, the management device 1 may determine whether the contents of the electronic document D2 that is the object of affixing the electronic signature S3 have not been altered from the contents of the electronic document D2 immediately following affixing of the electronic signature S2 that is one previous. For example, the management device 1 compares the post-signature hash value in the electronic certificate of row 2 shown in Fig. 4 with the pre-signature hash value in the electronic certificate of row 3 therein, and upon doing so, if the two agree, determines that the electronic document D2 has not been altered, and if the two do not agree, determines that the electronic document D2 has been altered. The management device 1 may output results of the determination, by transmitting to the user terminal 4A or the like. Accordingly, the person in charge at the order-receiving corporation can confirm the continuity of contents of the electronic document D2 that is the object, when performing the electronic signature S3.

The management device 1 affixes the electronic signature S3 that is generated to the electronic document D2, thereby generating an electronic document D3. The management device 1 then transmits the electronic document D3 that is generated to the user terminal 4C (S208). The user terminal 4C may store the electronic document D3 that is received in a storage unit that the user terminal 4C is capable of accessing.

The user terminal 4C displays the electronic document D3, and the person in charge at the factoring corporation confirms the contents of the electronic document D3 (S209). Upon the person in charge at the factoring corporation performing a depositing operation of a transfer payment, the user terminal 4C accepts this operation, and executes depositing processing of the transfer payment (S210). By performing the depositing processing of the transfer payment, for example, the transfer payment is wired from an account of the factoring corporation to an account of the collection agency corporation. The user terminal 4D that is used by the person in charge at the collection agency corporation executes deposit confirmation processing regarding the transfer payment accepted from the user terminal 4C, in accordance with the operations performed by the person in charge at the collection agency corporation (S211).

Upon confirming payment and receipt of the transfer payment, the person in charge at the factoring corporation, which is a new creditor, inputs a signature instruction for registration of receipt of receivables, as to the electronic document D3, to the user terminal 4C. The user terminal 4C transmits the signature instruction as to the electronic document D3 to the management device 1, in accordance with these operations (S212). The management device 1 receives the signature instruction as to the electronic document D3 from the user terminal 4C (S213).

The signature instruction as to the electronic document D3 may include, for example, data of the electronic document D3 itself, or may include information for identifying the electronic document D3 (series ID or the like) stored in the electronic document database 2 or the like. Also, the signature instruction may include, for example, any item recorded in the electronic certificate database 3 (item relating to the person in charge at the order-receiving corporation, or the like). Also, the signature instruction may include, for example, signature contents input by the person in charge at the factoring corporation. In the example shown in Fig. 4, the signature contents of "rights described in this invoice received" are shown.

On the basis of the signature instruction, the management device 1 generates an electronic signature S4 by the person in charge at the order-receiving corporation, and also generates an electronic certificate (S214). With respect to generating of the electronic certificate, the management device 1 generates a hash value for the electronic document D3 immediately prior to affixing the electronic signature S4, and includes this in the electronic certificate as the pre-signature hash value. Also, the management device 1 generates a hash value for an electronic document D4 after affixing the electronic signature S4, and includes this in the electronic certificate as the post-signature hash value. Also, the management device 1 generates a hash value for the electronic document D0 including no electronic signature S, and includes this in the electronic certificate as the original copy hash value. The management device 1 stores the electronic certificate that is generated (e.g., the electronic certificate of row 4 shown in Fig. 4) in the electronic certificate database 3 (S215).

The management device 1 may determine whether the contents of the electronic document D3 have not been altered. That is to say, the management device 1 may determine whether the contents of the electronic document D3 that is the object of affixing the electronic signature S4 have not been altered from the contents of the electronic document D3 immediately following affixing of the electronic signature S3 that is one previous. For example, the management device 1 compares the post-signature hash value in the electronic certificate of row 3 shown in Fig. 4 with the pre-signature hash value in the electronic certificate of row 4 therein, and upon doing so, if the two agree, determines that the electronic document D3 has not been altered, and if the two do not agree, determines that the electronic document D3 has been altered. The management device 1 may output results of the determination, by transmitting to the user terminal 4C or the like. Accordingly, the person in charge at the factoring corporation can confirm the continuity of contents of the electronic document D3 that is the object, when performing the electronic signature S4.

The management device 1 affixes the electronic signature S4 that is generated to the electronic document D3, thereby generating an electronic document D4. The management device 1 then transmits the electronic document D4 that is generated to the user terminal 4C (S216).

The user terminal 4C displays the electronic document D4, and the person in charge at the factoring corporation performs confirmation thereof (S217). Upon the person in charge at the factoring corporation performing a payment request operation for the transfer payment, the user terminal 4C accepts this operation, and transmits a payment request for the transfer payment to the user terminal 4D that is used by the person in charge at the collection agency corporation (S218). Upon receiving the payment request for the transfer payment from the user terminal 4C, the user terminal 4D that is used by the person in charge at the collection agency corporation executes payment processing for the transfer payment, in accordance with operations performed by the person in charge at the collection agency corporation (S219). By performing the payment processing of the transfer payment, for example, the transfer payment is deposited from an account of the collection agency corporation to an account of the order-receiving corporation. The user terminal 4A that is used by the person in charge at the order-receiving corporation executes payment confirmation processing regarding the transfer payment accepted from the user terminal 4D, in accordance with the operations performed by the person in charge at the order-receiving corporation (S220).

### (3-3) Extinguishment of Receivables

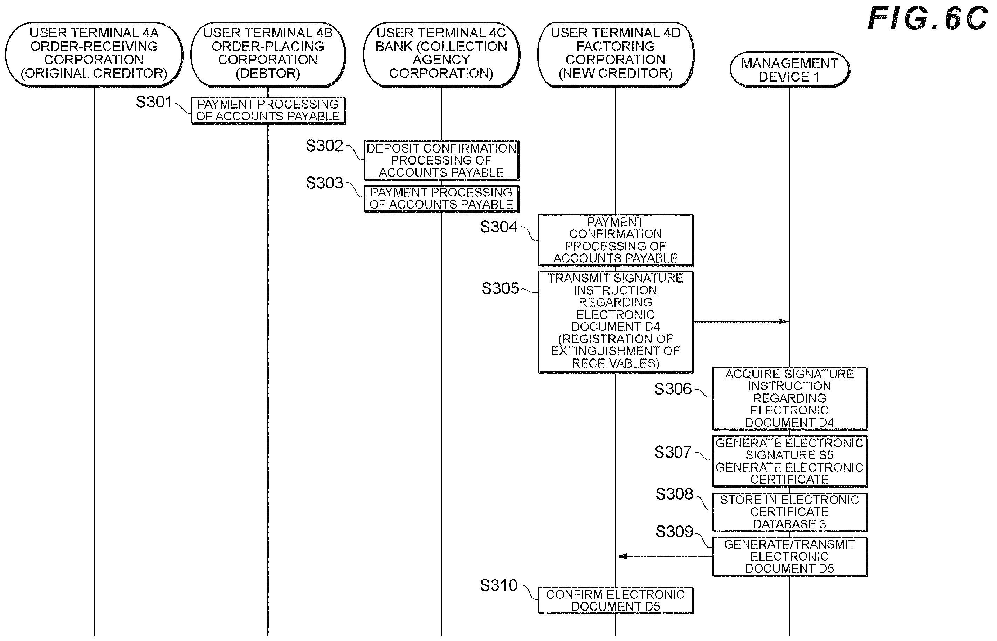

Fig. 6C is a sequence diagram relating to extinguishment of receivables. The user terminal 4B that is used by the person in charge at the order-placing corporation executes payment processing of accounts payable pertaining to the electronic document D4, in accordance with operations performed by the person in charge at the order-placing corporation (S301). By performing the payment processing of the accounts payable, the accounts payable are wired from an account of the order-placing corporation to the account of the collection agency corporation, for example. The user terminal 4D that is used by the person in charge at the collection agency corporation executes deposit confirmation processing regarding the accounts payable accepted from the user terminal 4B, in accordance with the operations performed by the person in charge at the collection agency corporation (S302). The user terminal 4D that is used by the person in charge at the collection agency corporation executes payment processing of the accounts payable, in accordance with operations performed by the person in charge at the collection agency corporation (S303). By performing the payment processing of the accounts payable, the accounts payable are deposited from the account of the collection agency corporation to the account of the factoring corporation, for example. The user terminal 4C that is used by the person in charge at the factoring corporation executes payment configuration processing of the accounts payable accepted from the user terminal 4D, in accordance with operations performed by the person in charge at the factoring corporation (S304).

Upon confirming the payment of the accounts payable, the person in charge at the factoring corporation, which is the new creditor, inputs a signature instruction for registration of extinguishment of receivables, as to regard to the electronic document D4, to the user terminal 4C. The user terminal 4C transmits the signature instruction as to the electronic document D4 to the management device 1, in accordance with these operations (S305). The management device 1 receives the signature instruction as to the electronic document D4 from the user terminal 4C (S306).

The signature instruction as to the electronic document D4 may include, for example, data of the electronic document D4 itself, or may include information for identifying the electronic document D4 (series ID or the like) stored in the electronic document database 2 or the like. Also, the signature instruction may include, for example, any item recorded in the electronic certificate database 3 (item relating to the person in charge at the factoring corporation, or the like). Also, the signature instruction may include signature contents input by the person in charge at the factoring corporation, for example. In the example shown in Fig. 4, the signature contents of "paid in accordance with invoice" are shown.

On the basis of the signature instruction, the management device 1 generates an electronic signature S5 by the person in charge at the factoring corporation, and also generates an electronic certificate (S307). With respect to generating of the electronic certificate, the management device 1 generates a hash value for the electronic document D4 immediately prior to performing the electronic signature S5, and includes this in the electronic certificate as the pre-signature hash value. Also, the management device 1 generates a hash value for an electronic document D5 after affixing the electronic signature S5, and includes this in the electronic certificate as the post-signature hash value. Also, the management device 1 generates a hash value for the electronic document D0 including no electronic signature S, and includes this in the electronic certificate as the original copy hash value. The management device 1 stores the electronic certificate that is generated (e.g., the electronic certificate of row 5 shown in Fig. 4) in the electronic certificate database 3 (S308).

The management device 1 may determine whether the contents of the electronic document D4 have not been altered. That is to say, the management device 1 may determine whether the contents of the electronic document D4 that is an object of affixing the electronic signature S5 have not been altered from the contents of the electronic document D4 immediately following affixing of the electronic signature S4 that is one previous. For example, the management device 1 compares the post-signature hash value in the electronic certificate of row 4 shown in Fig. 4 with the pre-signature hash value in the electronic certificate of row 5 therein, and upon doing so, if the two agree, determines that the electronic document D4 has not been altered, and if the two do not agree, determines that the electronic document D4 has been altered. The management device 1 may output results of the determination, by transmitting to the user terminal 4C or the like. Accordingly, the person in charge at the factoring corporation can confirm the continuity of contents of the electronic document D4 that is the object, when performing the electronic signature S5.

The management device 1 affixes the electronic signature S5 that is generated to the electronic document D4, thereby generating an electronic document D5. The management device 1 then transmits the electronic document D5 that is generated to the user terminal 4C (S309). The user terminal 4C displays the electronic document D5, and the person in charge at the factoring corporation performs confirmation thereof (S310).

### (4) Notes

In the above-described embodiment, determination processing of whether or not the electronic document (digital contents) has been altered is performed at timings of generating electronic signatures in accordance with the signature instructions (steps S110, S206, S214, S307). However, this determination processing of whether or not alteration has been performed is not limited to these timings, and may be executed by the user at an optional timing, for example, at a timing of requesting the management device 1 for determination via the user terminal 4. At this time, the user terminal 4 may, for example, accept information of the electronic signature that the user has specified as the object of the determination processing, include this information in the request for determination, and perform transmission thereof to the management device 1. The management device 1 may compare a pre-signature hash value pertaining to the electronic signature that is specified with a post-signature hash value of the electronic signature that is one previous from the electronic signature that is specified, and in a case in which the two agree, determine that the electronic document (digital contents) has not been altered with regard to the electronic signature that is specified, and in a case in which the two do not agree, determine that the electronic document (digital contents) has been altered with regard to the electronic signature that is specified.

**The** above-described electronic signature management system 100 is also applicable to a case of any user amending contents of a contract after the contract is concluded. That is to say, first, in a case in which amendment of contents of a concluded contact (deadline, monetary amount, or the like) become necessary, for example, the user performs operations at the user terminal 4 to acquire the electronic document that is the object. Thus, the user terminal 4 acquires the electronic document that is the object from the electronic document database 2, via the management device 1. Next, the user terminal 4 amends the electronic document as appropriate, in accordance with operations performed by the user. The user terminal 4 then transmits a signature instruction as to the electronic document that is amended (amended electronic document) to the management device 1, in accordance with operations performed by the user. The management device 1 generates an electronic signature as to the amended electronic document, and affixes this to the amended electronic document.

The amended electronic document to which the electronic signature is affixed may be transmitted, for example, from the management device 1 to the user terminal 4 that is used by another user (other party to the contract, etc.). The other user then confirms the contents of the amended electronic document displayed on the user terminal 4, and thereafter performs operations for electronic signature as to the amended electronic document, at the user terminal 4. The user terminal 4 transmits a signature instruction to the management device 1, the management device 1 generates an electronic signature of the other user, and further affixes this to the amended electronic document (to which the electronic signature of the user has been affixed). Accordingly, amendment of the contract contents can be performed in the file of the same electronic document, without exchanging amendment memorandums, for example. In conventional electronic signatures, there have been cases in which contents of electronic documents, and hash values based thereupon, change, leading to the original electronic signature becoming invalid. Conversely, with the electronic signature management system 100 according to the present embodiment, even when hash values of the electronic document change due to electronic signatures, the sequence of electronic signatures associated with each other by a series ID (system identification information) can be confirmed, and accordingly management of amendments to contract contents can also be easily performed.

The electronic signature management system 100 described above is capable of confirming a sequence of electronic signatures associated with each other by a series ID (system identification information) even when hash values of digital contents change due to electronic signatures, and accordingly is applicable to any digital content as long as consecutively affixing electronic signatures thereto is conceivable, not limited to contracts. For example, the electronic signature management system 100 is applicable to a case of a plurality of signees sequentially performing electronic signatures as to a signature list that is an electronic document, in a signature-collecting drive or the like in political activities.

### Reference Signs List

- 1: Management device
- 2: Digital contents database
- 3: Electronic certificate database
- 4, 4A, 4B, 4C, 4D: User terminal
- 11: Document management unit
- 12: Instruction acquisition unit
- 13: User information acquisition unit
- 14: Signature generating unit
- 15: Affixing unit
- 16: Electronic certificate generating unit
- 17: Electronic certificate storage unit
- 18: Transmitting/receiving unit
- 41: Image-capturing unit
- 42: Identifier acquisition unit
- 43: Held information acquisition unit
- 44: Hash value calculation unit
- 45: Consistency confirmation unit
- 46: Outputting unit
- 47: Operation accepting unit
- 48: Transmitting/receiving unit
- N: Communication network
- S: Electronic signature
- D: Digital contents
- D0, D1, D2, D3, D4, D5: Electronic document

## Claims

1. A management device for managing electronic signatures as to digital contents, the management device comprising:
an acquisition unit for acquiring an instruction for a signature as to the digital contents, and signature content information that is information indicating content of the signature;
a signature generating unit for generating an electronic signature in response to the instruction;
an affixing unit for affixing the electronic signature that is generated to the digital contents;
an electronic certificate generating unit for generating an electronic certificate that relates to the electronic signature and that includes the signature content information; and
a storage unit for storing the electronic certificate in a predetermined storage unit.

2. The management device according to claim 1, wherein the electronic signature includes an identifier that is coded, and that is for identifying the electronic certificate.

3. The management device according to claim 1, wherein the affixing unit affixes the electronic signature to the digital contents in a visually recognizable manner.

4. The management device according to claim 1, wherein the electronic certificate generating unit further includes, in the electronic certificate that is generated, at least one of an original copy hash value that is a hash value of the digital contents that includes no electronic signatures, a pre-signature hash value that is a hash value of the digital contents prior to the electronic signature being affixed, and a post-signature hash value that is a hash value of the digital contents after the electronic signature being affixed.

5. The management device according to claim 4, wherein the electronic certificate generating unit further includes, in the electronic certificate that is generated, order information indicating an order of the electronic signature,
the management device further comprising:
a comparing unit for comparing the post-signature hash value that is included in one electronic certificate, and the pre-signature hash value that is included in the electronic certificate that includes the order information following the order information included in the one electronic certificate; and
an output unit for outputting results of comparison by the comparing unit.

6. The management device according to claim 1, wherein the digital contents are an electronic document or an image.

7. A control method for controlling a management device for managing electronic signatures as to digital contents, the control method comprising the steps of:
acquiring an instruction for a signature as to the digital contents, and signature content information that is information indicating content of the signature;
generating an electronic signature in response to the instruction;
affixing the electronic signature that is generated to the digital contents;
generating an electronic certificate that relates to the electronic signature and that includes the signature content information; and
storing the electronic certificate in a predetermined storage unit.

8. A program that causes an information processing device to function as a management device for managing electronic signatures as to digital contents, the program causing the management device to function as:
an acquisition unit for acquiring an instruction for a signature as to the digital contents, and signature content information that is information indicating content of the signature,
a signature generating unit for generating an electronic signature in response to the instruction,
an affixing unit for affixing the electronic signature that is generated to the digital contents,
an electronic certificate generating unit for generating an electronic certificate that relates to the electronic signature and that includes the signature content information, and
a storage unit for storing the electronic certificate in the predetermined storage unit.
